(19) Europäisches Patentamt / European Patent Office / Office européen des brevets

(11) **EP 2 787 702 B1**

(12) **FASCICULE DE BREVET EUROPEEN**

(45) Date de publication et mention
de la délivrance du brevet:
**17.02.2016 Bulletin 2016/07**

(51) Int Cl.:
**H04L 12/26** *(2006.01)*   **H04W 28/02** *(2009.01)*
**H04W 74/08** *(2009.01)*   **H04L 12/841** *(2013.01)*

(21) Numéro de dépôt: **14163370.1**

(22) Date de dépôt: **03.04.2014**

(54) **Procédé de contrôle de congestion pour réseau d'accès à contention**

Verfahren zur Überlastungssteuerung für ein Netz mit wettbewerbsbasiertem Zugriff

Method for congestion control for contention-based access network

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.04.2013 FR 1300787**

(43) Date de publication de la demande:
**08.10.2014 Bulletin 2014/41**

(73) Titulaire: **THALES**
**92400 Courbevoie (FR)**

(72) Inventeurs:
• **Gineste, Mathieu**
  **31100 Toulouse (FR)**
• **Gibert, Olivier**
  **31100 Toulouse (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**EP-A1- 1 686 746   WO-A2-00/21244**

**Description**

L'invention concerne un procédé de contrôle de congestion dans un réseau de communication partagé par une pluralité de terminaux cherchant à accéder aux ressources du réseau pour communiquer. L'invention concerne également un dispositif de contrôle de congestion adapté à exécuter le procédé de contrôle de congestion selon l'invention de façon centralisée pour l'ensemble des terminaux du réseau.

Un but de l'invention est de concevoir une méthode de contrôle de congestion résultant de la transmission de paquets de données ou fragments de paquets par un grand nombre de terminaux partageant une même ressource de communication. L'invention est notamment adaptée aux réseaux utilisant un accès à contention, c'est-à-dire qui mettent en oeuvre une méthode d'accès à contention qui peut induire des collisions entre paquets émis par plusieurs terminaux sur la même ressource, par exemple sur un même slot temporel.

Plus précisément, l'invention vise à fournir une solution qui permet de réduire le délai de transmission correcte d'un paquet pour un nombre important de terminaux communiquant simultanément.

On connait les méthodes d'accès à contention de type ALOHA ou Slotted ALOHA. Ces méthodes sont basées sur des protocoles d'accès aléatoire. Chaque utilisateur accède aux ressources de transmission de manière indépendante vis-à-vis des autres utilisateurs. Pour chaque paquet transmis, l'utilisateur attend un accusé de réception du destinataire. S'il ne le reçoit pas, il retransmet les mêmes données avec un retard aléatoire et ce mécanisme est itéré jusqu'à réception d'un accusé de réception ou jusqu'à ce qu'un nombre maximum de tentatives aient été réalisées.

Ce type de méthode présente l'inconvénient d'allonger significativement le délai de transmission d'un paquet lorsque des retransmissions sont requises y compris à charge relativement faible du réseau de communication (c'est-à-dire lorsqu'il y a peu de terminaux par rapport à la ressource disponible) car aucun mécanisme n'est prévu pour diminuer sensiblement et de manière préventive le taux de collisions initial entre paquets émis par des émetteurs distincts et donc le taux de retransmission, ce qui peut entrainer des délais conséquents.

On connait également les méthodes d'accès à contention dites CRDSA (Contention Resolution Diversity Slotted ALOHA), telle que décrite par exemple dans le brevet européen publié sous le numéro EP 1 686 746 B1. Pour chaque paquet à émettre, une ou plusieurs répliques de ce paquet sont générées et transmises, simultanément au paquet source et avec un délai de transmission aléatoire tiré initialement dans une fenêtre correspondant à la trame logique suivant l'arrivée du paquet. Ce mécanisme permet au récepteur de reconstruire un paquet éventuellement perdu à cause d'une collision grâce à la redondance introduite par le biais des répliques émises et grâce à des annulations d'interférence de paquet collisionnés si un paquet ou une réplique provenant d'un autre émetteur ont pu être décodés sur une autre position dans la trame.

L'algorithme de contrôle de congestion défini, pour une méthode dite CRDSA, dans le brevet européen publié sous le numéro EP 1 686 746 B1 utilise une information sur la charge du réseau. La manière dont cette charge du réseau est évaluée n'est cependant pas précisée. Une information sur la charge du réseau provenant d'une entité centrale est transmise régulièrement vers les différents terminaux. Si cette charge dépasse un seuil, chaque terminal va augmenter, selon une probabilité décroissante et de manière indépendante, le retard de transmission des fragments qu'il doit émettre d'une trame logique supplémentaire. Si la charge décroit en dessous du seuil, le terminal va également diminuer, selon une probabilité donnée, le retard à l'émission de ses fragments d'une trame logique. Chaque terminal va donc attendre un nombre de trames logiques différent en fonction de l'évolution propre de sa fenêtre de congestion, sachant qu'un fragment et ses répliques ne pourront être transmis que sur une seule trame logique. Par trame logique, on entend un intervalle temporel de durée fixe défini par la norme ou le système employés pour communiquer et qui constitue l'unité temporelle permettant de fixer un repère aux émetteurs et aux récepteurs pour la transmission et la réception des paquets de données ou des fragments de ces paquets. Une trame logique peut être composée d'un nombre donné de slots ou trames physiques élémentaires. En particulier, dans le cas de méthodes d'accès à contention qui, pour chaque fragment de données utiles à émettre, génèrent un ou plusieurs fragments redondants, comme par exemple la méthode CRDSA, l'ensemble des fragments (utile et redondants) est transmis dans une trame logique.

L'approche préconisée concernant le contrôle de congestion dans le brevet européen publié sous le numéro EP 1 686 746 B1, est une approche qui réagit à la surcharge du canal de transmission en utilisant une notion de seuil de charge et qui n'est donc pas une approche préventive. Un nombre de collisions non négligeable peut ainsi apparaitre temporairement au moment où le seuil est franchi et il se peut que le temps de réaction à cette surcharge étant trop grand, cela entraîne des retransmissions de messages ou fragments de message entrainant une augmentation du délai de transmission des messages. Cette approche implique également une politique de contrôle de congestion et d'accès au canal distincte entre terminaux et qui n'est pas gérée de façon centralisée, ce qui peut potentiellement pénaliser certains terminaux et en favoriser d'autres. Cette approche peut potentiellement entraîner une iniquité entre les terminaux utilisateurs et rend difficile l'application de niveaux de qualité de services distincts pour des paquets provenant d'un même terminal ou de terminaux différents. Ces méthodes présentent également l'inconvénient d'augmenter artificiellement la charge du réseau du fait des répliques générées systématiquement pour chaque paquet à émettre ce qui rend plus difficile l'évaluation de la charge réelle, autrement dit la charge liée aux données utiles.

Le procédé de contrôle de congestion proposé par l'invention consiste en une méthode préventive permettant de diminuer le taux de collisions initiales (ou collisions non résolues initiales pour les méthodes émettant plusieurs paquets de données pour un paquet utile) entre paquets émis par plusieurs émetteurs. Ainsi, le nombre de retransmissions nécessaires devient sensiblement nul et le délai de transmission d'un paquet vers sa destination est sensiblement raccourci.

La présente invention se différencie notamment des méthodes de contrôle de congestion connues en ce qu'elle consiste en une approche préventive et non réactive à la congestion du réseau, ayant pour objectif de minimiser le nombre de retransmissions Le procédé selon l'invention est exécutée de façon centralisée (pas de nécessité de capacité de télédétection pour les émetteurs), ce faisant tous les terminaux actifs utilisent, à un instant donné, la même fenêtre de congestion ce qui permet de contrôler précisément le niveau de congestion et d'assurer une équité entre terminaux. Dans le cas de méthodes d'accès à contention utilisant des fragments redondants en plus du fragment utile à émettre, la notion de trame logique de durée fixe est supprimée du point de vue du procédé de contrôle de congestion au profit d'une fenêtre de congestion glissante de taille variable s'adaptant en permanence au nombre de terminaux actifs dans le réseau de communication. En effet, l'invention prend en compte le nombre de terminaux actifs à chaque instant pour dimensionner la fenêtre de congestion.

L'invention a pour objet un procédé de contrôle de congestion dans un réseau de communications comprenant une pluralité de terminaux aptes à émettre un message, ledit procédé étant caractérisé en ce qu'il comporte les étapes suivantes :

- Recevoir un message ou un fragment de message à un instant donné,
- Evaluer le nombre de terminaux en cours d'émission,
- Définir un intervalle temporel, appelé fenêtre de congestion, de durée $\Delta T_f$ configurée de sorte à être proportionnelle au nombre N de terminaux en cours d'émission et inversement proportionnelle à la charge G d'entrée maximale du réseau qui permet d'obtenir un taux de retransmissions sensiblement nul,
- Pour chaque terminal et chaque message ou fragment de message à émettre, faire coïncider le début de la fenêtre de congestion avec ledit instant donné de réception d'un message ou fragment de message et définir un instant d'émission réel dudit message ou fragment de message comme une valeur aléatoire prise dans la fenêtre de congestion.

Selon un aspect particulier de l'invention, la durée $\Delta T_f$ est normalisée par rapport à une unité de temps liée à la durée d'émission d'un message ou fragment de message et est prise égale à $\Delta T_f = \dfrac{N \times 2}{G}$.

Selon un aspect particulier de l'invention, la charge d'entrée maximale G du réseau qui permet d'obtenir un taux de retransmissions sensiblement nul est déterminée analytiquement ou par simulation en faisant varier la charge d'entrée du réseau et en la comparant à la charge de sortie, la charge d'entrée G retenue étant la valeur maximale de la charge d'entrée pour laquelle la charge de sortie est sensiblement égale à la charge d'entrée.

Selon un aspect particulier de l'invention, pour chaque message ou fragment de message à émettre, au moins un message ou fragment de message redondant est généré, l'instant d'émission réel d'un message ou fragment de message redondant étant défini comme une valeur aléatoire prise dans ladite fenêtre de congestion dont le début coïncide avec l'instant donné de réception dudit message ou fragment de message à émettre, la charge G d'entrée du réseau est remplacée par la charge normalisée d'entrée du réseau égale à la charge G d'entrée du réseau divisée par le nombre de messages ou fragments de message total associé à un message ou fragment de message à émettre.

Selon un aspect particulier de l'invention, la durée $\Delta T_f$ de la fenêtre de congestion et l'instant d'émission dudit message sont définis comme des nombres entiers de slots temporels, un slot temporel ayant une durée constante au moins égale à la durée nécessaire pour transmettre un message ou fragment de message.

Le procédé selon l'invention peut comporter en outre une étape de transmission dudit message ou fragment de message à émettre ou dudit message ou fragment de message redondant avec un retard égal audit instant d'émission réel.

Selon un aspect particulier de l'invention le nombre N de terminaux en cours d'émission est évalué en exécutant les sous-étapes suivantes, pour chaque message émis par un terminal sous forme d'au moins un fragment :

- Identifier le numéro ou la position du fragment émis parmi les fragments appartenant audit message,
- Si le fragment émis est le 1er fragment d'un message, incrémenter d'une unité le nombre N de terminaux en cours d'émission,
- Si le fragment émis est le dernier fragment d'un message, décrémenter d'une unité le nombre N de terminaux en cours d'émission,
- Si le fragment émis est l'unique fragment d'un message, incrémenter d'une unité le nombre N de terminaux en cours d'émission puis décrémenter, après une durée prédéterminée, d'une unité le nombre N de terminaux en cours d'émission.

L'invention a également pour objet un dispositif pour le contrôle de congestion dans un réseau de communications comprenant une pluralité de terminaux aptes à émettre un message, ledit dispositif étant caractérisé en ce qu'il comprend des premiers moyens adaptés pour évaluer le nombre de terminaux en cours d'émission et définir un intervalle temporel, appelé fenêtre de congestion, de durée ΔTf configurée de sorte à être proportionnelle au nombre N de terminaux en cours d'émission et inversement proportionnelle à la charge G d'entrée maximale du réseau qui permet d'obtenir un taux de retransmissions sensiblement nul et des seconds moyens adaptés pour transmettre, à une fréquence donnée, à l'ensemble des terminaux du réseau une information permettant de déduire la durée ΔTf de la fenêtre de congestion.

Selon un aspect particulier du dispositif selon l'invention, lesdits premiers moyens sont adaptés à exécuter les sous-étapes suivantes, pour chaque message émis par un terminal sous forme d'au moins un fragment :

- Identifier le numéro ou la position du fragment émis parmi les fragments appartenant audit message,
- Si le fragment émis est le 1er fragment d'un message, incrémenter d'une unité le nombre de terminaux en cours d'émission,
- Si le fragment émis est le dernier fragment d'un message, décrémenter d'une unité le nombre de terminaux en cours d'émission,
- Si le fragment émis est l'unique fragment d'un message, incrémenter d'une unité le nombre de terminaux en cours d'émission puis décrémenter, après une durée prédéterminée, d'une unité le nombre de terminaux en cours d'émission.

L'invention a également pour objet un terminal émetteur apte à émettre un message dans un réseau de communications comprenant une pluralité desdits terminaux, caractérisé en ce qu'il comprend des premiers moyens adaptés pour recevoir une information permettant de déduire la durée ΔTf d'un intervalle temporel, appelé fenêtre de congestion, au sein duquel ledit message peut être émis, des seconds moyens adaptés pour définir l'instant d'émission réel dudit message ou d'un fragment dudit message comme une valeur aléatoire prise dans la fenêtre de congestion dont le début coïncide avec l'instant donné de réception dudit message et des troisièmes moyens aptes à transmettre ledit message ou fragment de message avec un retard égal audit instant d'émission défini.

L'invention a encore pour objet un réseau de communication comprenant une pluralité de terminaux émetteurs selon l'invention et au moins un dispositif de contrôle de congestion au sein dudit réseau selon l'invention.

L'invention a encore pour objet un programme d'ordinateur comportant des instructions pour l'exécution du procédé de contrôle de congestion selon l'invention, lorsque le programme est exécuté par un processeur ainsi qu'un support d'enregistrement lisible par un processeur sur lequel est enregistré un programme comportant des instructions pour l'exécution du procédé de contrôle de congestion selon l'invention, lorsque le programme est exécuté par un processeur.

D'autres caractéristiques et avantages de la présente invention apparaîtront mieux à la lecture de la description qui suit en relation aux dessins annexés qui représentent :

- La figure 1, un schéma de principe illustrant le fonctionnement d'un procédé de contrôle de congestion selon l'invention,
- La figure 2, un organigramme décrivant les étapes de mise en oeuvre du procédé de contrôle de congestion selon l'invention,
- La figure 3, un schéma d'un réseau de communications au sein duquel le procédé de contrôle de congestion selon l'invention est mis en oeuvre,

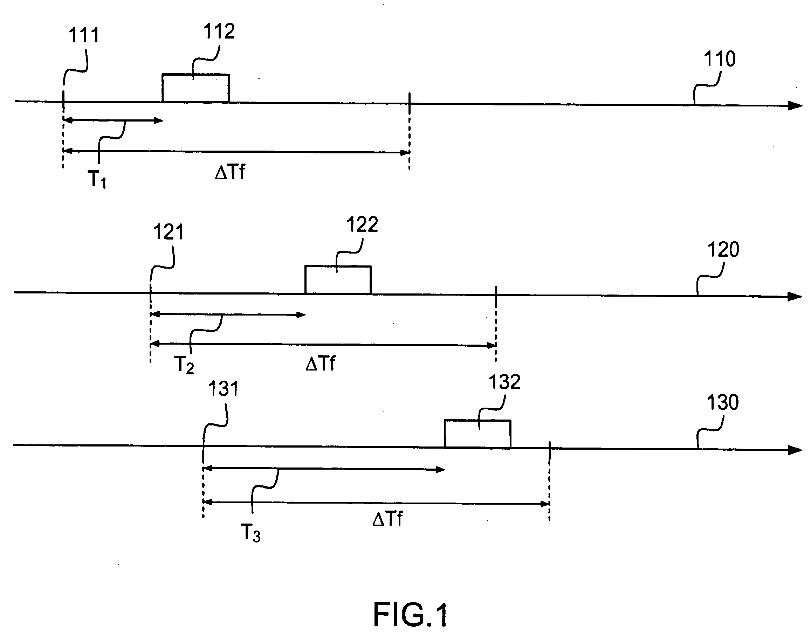

La figure 1 illustre, sur un schéma de principe, le fonctionnement du procédé de contrôle de congestion selon l'invention.

Sur la figure 1 sont représentés trois axes temporels 110,120,130 associés à trois terminaux émetteurs distincts faisant partie d'un même réseau de communication. Les émetteurs peuvent être fixes ou mobiles ou embarqués dans un porteur, par exemple un aéronef. La communication au sein du réseau peut respecter un standard de télécommunication, par exemple adapté aux communications aéronautiques ou spatiales. La liaison de communication entre un émetteur et un récepteur peut être directe ou être composée de plusieurs segments de communication, par exemple un segment montant entre un émetteur et un satellite et un segment descendant entre le satellite et un récepteur.

Pour communiquer, chaque émetteur est apte à générer des données sous forme de paquets ou messages. Un paquet peut être fragmenté en plusieurs fragments de taille fixe réduite. Chaque paquet, ou chaque fragment de paquet est transmis pendant un intervalle temporel de durée fixe appelé slot temporel. Selon la norme de transmission utilisée au sein du réseau, un slot temporel peut également avoir une durée variable, c'est notamment le cas lorsque les données à émettre sont protégées par un code correcteur utilisant des rendements différents par slot temporel. L'accès aux ressources temporelles est effectué au rythme d'un slot.

Dans un mode de réalisation alternatif de l'invention, chaque paquet, ou chaque fragment de paquet est transmis au fil de l'eau sans respecter un découpage temporel en slots de durée fixe ou variable.

Par la suite on emploiera indifféremment le terme paquet, message ou fragment pour désigner les données émises à un instant par un émetteur.

La figure 1 illustre le fonctionnement du procédé selon l'invention pour trois terminaux émetteurs qui cherchent à accéder aux ressources temporelles de communication simultanément. L'exemple de la figure 1 est bien entendu illustratif et nullement limitatif. Dans un cas réel, le nombre de terminaux actifs simultanément est bien supérieur à trois.

Sur l'exemple de la figure 1, un premier terminal cherche à accéder aux ressources de communication pour émettre, à un premier instant 111 un paquet ou fragment de paquet 112. Au lieu d'émettre ce paquet 112 instantanément, c'est-à-dire au premier instant 111, le premier terminal effectue un tirage aléatoire d'une valeur dans un intervalle temporel de durée prédéterminée ΔTf appelé fenêtre de congestion. La durée de cette fenêtre est calculée par une entité centrale capable de recevoir les communications de l'ensemble des terminaux émetteurs, son calcul sera explicité plus loin. La valeur aléatoire T1 tirée dans l'intervalle de durée ΔTf correspond à l'instant d'émission effectif du paquet 112.

Le procédé décrit pour le premier terminal est appliqué de la même façon pour un deuxième terminal qui cherche à transmettre un deuxième paquet 122 à un deuxième instant 121. Un tirage aléatoire dans la fenêtre de congestion courante détermine l'instant T2 d'émission du deuxième paquet 122. Cette fenêtre de congestion est de durée ΔTf identique à celle utilisée pour le premier terminal sauf si sa durée a été mise à jour entre l'émission d'un premier paquet 112 par un premier terminal et l'émission d'un deuxième paquet 122 par un deuxième terminal.

Le procédé s'applique à l'identique pour l'émission d'un troisième paquet 123 par un troisième terminal à un instant d'émission T3 déterminé par tirage aléatoire dans la fenêtre de congestion de durée ΔTf.

La fenêtre de congestion est une fenêtre glissante, c'est-à-dire que son début coïncide toujours avec l'instant 111,121,131 de prise en charge d'un paquet, autrement dit l'instant de réception d'un paquet par le procédé selon l'invention.

La durée de la fenêtre de congestion peut être exprimée en nombre entiers de slots temporels ou directement en unité de temps lorsque l'accès aux ressources temporelles n'est pas organisé en slots. Le procédé selon l'invention est appliqué de façon identique pour tous les paquets à émettre y compris les paquets retransmis lorsqu'un accusé de réception n'est pas correctement reçu par l'émetteur.

Dans le cas particulier où une méthode d'accès à contention de type CRDSA est utilisée, plusieurs fragments redondants peuvent être générés pour un fragment utile à transmettre. Dans ce cas, la fenêtre de congestion utilisée pour la transmission du fragment utile et des fragments redondants est la même et débute sur l'instant de prise en charge du fragment utile.

L'invention diffère notamment des méthodes de contrôle de congestion usuelles en ce que tous les paquets à émettre, y compris les premiers paquets sont émis avec un décalage temporel aléatoire dépendant directement du nombre de terminaux actifs et se basant sur une fenêtre de congestion glissante de taille variable.

La borne inférieure de la fenêtre de congestion correspond à l'instant où le terminal souhaite émettre un paquet et la borne supérieure de la fenêtre de congestion varie en fonction du nombre de terminaux actifs. En procédant de la sorte, on diminue le taux de collisions initial entre paquets émis par différents émetteurs de manière à rendre le taux de retransmission de ces paquets négligeable et on améliore le délai de transmission et de réception correcte d'un paquet. Cette amélioration est d'autant plus impactante pour des communications ayant un profil de trafic sporadique et pour les services ayant des exigences contraintes en termes de délai, c'est le cas notamment pour certaines communications aéronautiques en particulier si ces communications utilisent une technologie satellite pour leur transport.

La fenêtre de congestion est déterminée par une entité centrale, par exemple un dispositif de contrôle de congestion qui est adapté à évaluer, à chaque instant, le nombre de terminaux actifs c'est-à-dire en cours d'émission. En fonction de ce nombre, la durée de la fenêtre de congestion est modulée. En particulier, plus le nombre de terminaux actifs est important, plus il est nécessaire que la fenêtre de congestion soit grande pour limiter les collisions entre paquets émis par différents terminaux et ainsi limiter au maximum le nombre de retransmissions pouvant impliquer un délai important notamment pour des technologies ayant des temps de propagation élevé (tel que les technologies de transmission par satellite par exemple). Au contraire, lorsque le nombre de terminaux actifs diminue, la fenêtre de congestion peut être réduite afin de diminuer le délai de transmission des paquets vers leur destination. L'évaluation du nombre de terminaux actifs à un instant donné peut se faire par diverses méthodes dont un exemple est donné plus en avant dans la description.

On décrit à présent plus en détail un exemple de réalisation, selon l'invention, du calcul de la durée de la fenêtre de congestion.

La durée de la fenêtre de congestion est calculée de sorte à se placer à un niveau de charge dans le réseau qui permette de limiter le taux de retransmission des fragments et indirectement de limiter le délai de transmission total d'un paquet.

Pour cela, en fonction du nombre de terminaux en cours de transmission, la fenêtre de congestion est adaptée de manière à rester à un niveau de charge qui permet de limiter ce taux de retransmission.

Le niveau de charge moyen généré par un terminal utilisant une fenêtre de congestion de durée ΔTf peut être estimé de la façon suivante.

Chaque terminal actif effectue un tirage aléatoire de manière uniforme dans la fenêtre de congestion, correspondant à une valeur comprise dans l'intervalle [0, ΔTf], afin d'envoyer chaque fragment utile ou redondant sur le canal de communication. La valeur aléatoire tirée est convertie en un retard, exprimé directement en unité de temps ou en nombre de slots temporels, et qui est utilisé pour retarder l'émission de chaque fragment.

Ainsi, chaque fragment est émis avec un retard moyen égal à ∆Tf /2 ce qui correspond à un trafic moyen égal à 2/∆Tf fragments par unité de temps. La durée ∆Tf est normalisée par rapport à une unité de temps liée à la durée d'émission d'un fragment. Dans les calculs qui suivent, l'hypothèse est faite d'une taille de fragment constante et donc d'une durée constante d'émission d'un fragment sur un canal donné qui correspond à l'unité de temps. Dans le cas d'un canal dit slotté, l'unité de temps correspond à la durée du slot (si ce dernier est de durée constante).

Chaque terminal génère la charge $G_{terminal}$ suivante pour la transmission d'un paquet :

$$G_{ter\,min\,al} = \frac{nb\_fragments \times 2}{\Delta T_f}$$

*nb_fragments* correspond au nombre de fragments émis pour la transmission d'un fragment de donnée utile, autrement dit ce nombre englobe les éventuels fragments redondants générés.

L'ensemble des terminaux actifs au sein du réseau génère donc la charge suivante :

$$G = \frac{N \times nb\_fragments \times 2}{\Delta T_f} \, ,$$

avec N le nombre de terminaux actifs.

La charge générée par les retransmissions éventuelles est volontairement omise car l'objectif est de se placer à un niveau de charge pour lequel le taux de retransmission des paquets est négligeable. Il sera calculé en permanence une valeur de ∆Tf, en fonction du nombre de terminaux actifs, qui permet de rester à un niveau de charge du canal pour lequel ce taux de retransmission négligeable des paquets est maintenu. Ainsi plus le nombre de terminaux actifs augmente plus la fenêtre de congestion va s'étendre (par le biais de sa borne supérieure) et plus le nombre de terminaux actifs diminue, plus la fenêtre de congestion va diminuer. La taille de la fenêtre fait abstraction de la notion de trame ou super trame logique employée dans certaines méthodes d'accès à contention de l'art antérieur et considère une fenêtre glissante dont le départ coïncide avec le moment où un terminal doit transmettre un paquet sur le canal de communication.

On peut donc en déduire la valeur de la borne supérieure de la fenêtre de congestion ∆Tf comme suit :

$$\Delta T_f = \frac{N \times nb\_fragments \times 2}{G} \quad (1)$$

Dans le cas où aucun fragment redondant n'est généré, par exemple dans le cas de méthodes d'accès à contention de type ALOHA ou slotted ALOHA, la relation (1) se réduit à $\Delta T_f = \dfrac{N \times 2}{G} \quad (2)$.

Pour les méthodes d'accès à contention qui utilisent des fragments redondants, on définit la charge normalisée $G=nb\_fragments \times G_{normalisée}$ qui correspond à la charge générée par les données utiles à l'exception des données redondantes. La relation (1) s'écrit dans ce

cas : $\Delta T_f = \dfrac{N \times 2}{G_{normalisée}} \quad (3)$.

Dans tous les cas, la durée ∆Tf est une durée normalisée par rapport à une unité de temps qui peut être un slot ou la durée d'émission d'un fragment.

La valeur de la charge G cible utilisée pour déterminer la durée ∆Tf de la fenêtre de congestion est déterminée par simulation ou analytiquement de la façon suivante.

On simule les échanges entre terminaux émetteurs et récepteurs en prenant en compte la méthode d'accès à contention visée et les paramètres utilisées par cette méthode (par exemple le nombre de fragments redondants,...). On mesure la charge en entrée du réseau, c'est-à-dire le nombre de fragments émis et la charge en sortie du réseau, c'est-à-dire le nombre de fragments correctement reçus par un récepteur. Lorsque le nombre de fragments à émettre augmente, des phénomènes de collision apparaissent qui induisent des pertes de fragments en réception. La valeur G de la charge du réseau utilisée pour la détermination de la durée ∆Tf de la fenêtre de congestion est la charge d'entrée maximale simulée ou calculée de manière analytique qui permet d'obtenir une charge de sortie sensiblement égale à la charge d'entrée. Lorsque la charge de sortie s'écarte significativement de la charge d'entrée, cela signifie que des collisions ne pouvant être résolues apparaissent entrainant donc des retransmissions.

Autrement dit, la valeur G de la charge du réseau utilisée pour la détermination de la durée ∆Tf de la fenêtre de congestion est égale à la charge maximale qui permet d'obtenir un taux de collisions non résolu sensiblement nul.

Dans le cas de méthodes d'accès à contention qui utilisent des fragments de redondance, la charge G est remplacée par la charge normalisée.

La valeur cible de la charge, ou de la charge normalisée, est calculée initialement, par simulation ou de manière analytique, une fois pour toute et en fonction de la méthode d'accès à contention visée et de son paramétrage éventuel (par exemple le nombre de fragments redondants utilisé,...).

La durée ∆Tf de la fenêtre de congestion est ensuite calculée en fonction de la charge cible G et du nombre de terminaux N, actifs à un instant donné dans le réseau, en fonction de l'une des relations (1),(2) ou (3).

Pour évaluer le nombre de terminaux actifs à un instant donné, une méthode possible est à présent décrite. Chaque fragment de paquet émis comporte une information permettant d'identifier le numéro ou la position de ce fragment parmi l'ensemble des fragments émis issus de la fragmentation d'un même paquet. Il est donc possible d'identifier le premier fragment d'un paquet. De même le dernier fragment issu de la fragmentation d'un même paquet comporte une information permettant de l'identifier en tant que tel. Ainsi, il est possible d'identifier le dernier fragment d'un paquet.

Le dispositif de contrôle de congestion selon l'invention reçoit les fragments émis par les différents émetteurs et en déduit si ce fragment est le premier ou le dernier d'un paquet. Alternativement le dispositif de contrôle de congestion selon l'invention peut recevoir directement l'information identifiant le numéro ou la position du fragment, par exemple transmise par un point d'accès du réseau. Le dispositif selon l'invention maintient en permanence à jour un compteur N du nombre de terminaux actifs. Ce compteur, initialisé à 0, est incrémenté de 1 lorsqu'un premier fragment d'un paquet est émis et est décrémenté de 1 lorsqu'un dernier fragment d'un paquet est émis. Lorsque le paquet à transmettre n'est pas fragmenté, c'est le cas notamment lorsqu'il est de taille réduite, le compteur N du nombre de terminaux actifs est incrémenté de 1 puis est décrémenté de 1 au bout d'une durée prédéterminée. D'autres techniques pour évaluer le nombre de terminaux actifs peuvent être envisagées, par exemple en se basant sur des informations concernant l'utilisation de la ressource et le taux de décodage réussi.

La durée de la fenêtre de congestion est ensuite calculée en fonction de la valeur du compteur N puis est transmise aux émetteurs du réseau à une fréquence donnée. La transmission de la fenêtre de congestion aux émetteurs du réseau peut être effectuée à chaque mise à jour de la fenêtre ou au bout d'un nombre de modifications de la fenêtre donné ou encore à intervalle régulier en fonction de la variabilité forte ou non du nombre de terminaux actifs de manière à limiter le délai mais également la signalisation associée à l'envoi de cette information aux émetteurs du réseau. La fenêtre de congestion est donc mise à jour régulièrement afin de s'adapter aux conditions de charge du réseau. Une marge d'erreur sur l'évaluation du nombre N de terminaux actifs peut être intégrée au calcul de la durée de la fenêtre de congestion pour prendre en compte les évolutions de ce nombre de terminaux actifs.

Dans une variante de réalisation de l'invention, plusieurs fenêtres de congestion distinctes peuvent être définies en fonction de différentes classes de service associées à chaque fragment à émettre. Un intérêt d'utiliser plusieurs fenêtres de congestion est de rendre prioritaire certaines classes de service vis-à-vis d'autres. Par exemple, une fenêtre de congestion de durée plus courte peut être allouée à certains terminaux ou à certains messages prioritaires et une fenêtre de congestion plus importante peut être allouée à d'autres terminaux ou messages moins prioritaires.

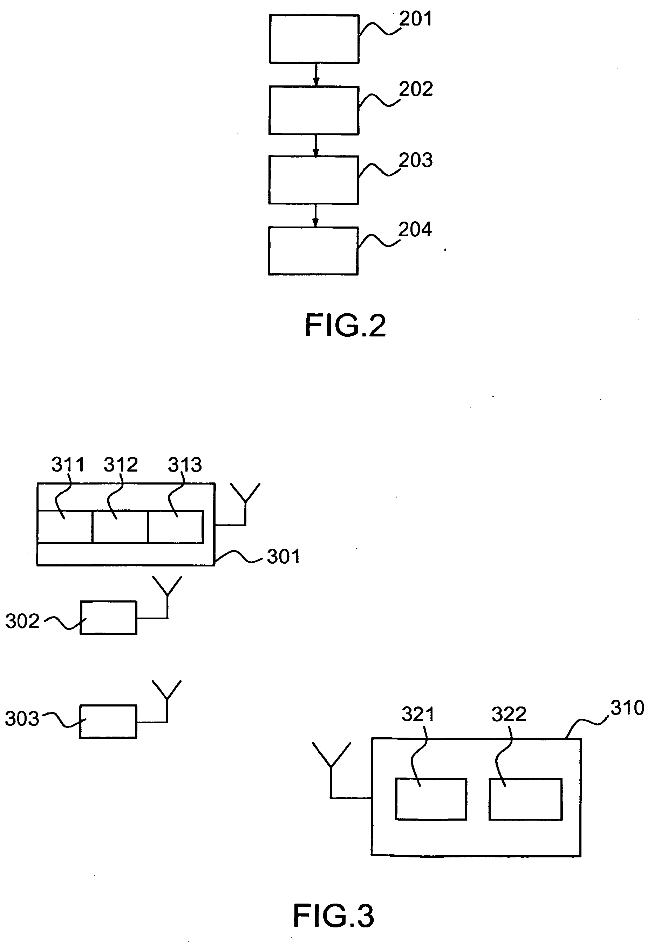

La figure 2 schématise, sur un organigramme, les étapes de mise en oeuvre du procédé selon l'invention.

Le procédé selon l'invention consiste à exécuter les étapes suivantes. Dans une première étape 201, le nombre de terminaux en cours d'émission est évalué. Dans une deuxième étape 202, la durée de la fenêtre de congestion est calculée en fonction du nombre de terminaux en cours d'émission. Dans une troisième étape 203, chaque terminal qui souhaite émettre un paquet ou un fragment de paquet effectue un tirage aléatoire d'une valeur dans la fenêtre de congestion pour déterminer l'instant d'émission réel du paquet ou fragment. Lorsque des fragments redondants sont générés en plus du fragment utile, les tirages aléatoires associés aux fragments redondants sont effectués dans la même fenêtre de congestion que celle utilisée pour le fragment utile. Dans une dernière étape 204, le paquet ou fragment de paquet est transmis à l'instant d'émission calculé.

La figure 3 schématise un exemple de réseau de communication dans lequel le procédé selon l'invention est appliqué.

Le réseau comporte une pluralité de terminaux émetteurs 301,302,303 selon l'invention. Un terminal émetteur 301 comprend des premiers moyens 311 adaptés pour recevoir une information permettant de déduire la durée de la fenêtre de congestion, des seconds moyens 312 adaptés à effectuer un tirage aléatoire dans la fenêtre de congestion pour définir l'instant d'émission d'un message et des troisièmes moyens 313 aptes à transmettre un message ou un fragment de message à l'instant d'émission défini.

Les premiers, seconds et troisièmes moyens que comporte un terminal émetteur selon l'invention peuvent être distincts ou être fusionnés en une seule entité. Ils peuvent être mis en oeuvre par des circuits matériels ou des modules logiciels. Par exemple ils peuvent être constitués d'une pile protocolaire réseau, d'une couche d'accès au médium de transmission et d'une couche physique respectant le standard de communication imposé par le réseau.

Le réseau comporte également un dispositif de contrôle de congestion 310 apte à communiquer avec les différents émetteurs 301,302,303 du réseau. Le dispositif 310 comporte des premiers moyens 321 adaptés pour évaluer le nombre de terminaux en cours d'émission dans le réseau et définir la durée d'une fenêtre de congestion en fonction de ce nombre, par exemple en appliquant la méthode décrite ci-dessus. Le dispositif 310 comporte également des seconds moyens 322 pour transmettre, lorsque le nombre de terminaux évolue ou de manière régulière, à l'ensemble des terminaux du réseau une information permettant de déduire la durée de la fenêtre de congestion.

Les premiers et seconds moyens que comporte le dispositif de contrôle de congestion selon l'invention peuvent également être distincts ou être fusionnés en une seule entité. Ils peuvent être mis en oeuvre par des modules matériels ou logiciels.

La notion de trame logique n'étant plus prise en compte à l'émission par le procédé de contrôle de congestion, chaque récepteur doit définir une fenêtre de réception suffisamment grande et mémoriser le signal correspondant pour recevoir et décoder les différents fragments redondants éventuels associés à un même fragment utile (correspondant au minimum à la durée de la fenêtre de congestion).

Le procédé selon l'invention peut ainsi être implémenté à partir d'éléments matériel et/ou logiciel. Il peut notamment être mis en oeuvre en tant que programme d'ordinateur comportant des instructions pour son exécution. Le programme d'ordinateur peut être enregistré sur un support d'enregistrement lisible par un processeur.

## Revendications

1. Procédé de contrôle de congestion dans un réseau de communications comprenant une pluralité de terminaux aptes à émettre un message, ledit procédé étant **caractérisé en ce qu'**il comporte les étapes suivantes :

    - Recevoir un message ou un fragment de message à un instant donné,
    - Evaluer (201) le nombre de terminaux en cours d'émission,
    - Définir (202) un intervalle temporel, appelé fenêtre de congestion, de durée ΔTf configurée de sorte à être proportionnelle au nombre N de terminaux en cours d'émission et inversement proportionnelle à la charge G d'entrée maximale du réseau qui permet d'obtenir un taux de retransmissions sensiblement nul,
    - Pour chaque terminal et chaque message ou fragment de message à émettre (112,122,132), faire coïncider le début de la fenêtre de congestion avec ledit instant donné (111,121,131) de réception d'un message ou fragment de message et définir (203) un instant d'émission réel (T1,T2,T3) dudit message ou fragment de message (112,122,132) comme une valeur aléatoire prise dans la fenêtre de congestion.

2. Procédé de contrôle de congestion selon la revendication 1 dans lequel la durée ΔTf est normalisée par rapport à une unité de temps liée à la durée d'émission d'un message ou fragment de message et est prise égale à $\Delta T_f = \dfrac{N \times 2}{G}$.

3. Procédé de contrôle de congestion selon l'une des revendications précédentes dans lequel la charge d'entrée maximale G du réseau qui permet d'obtenir un taux de retransmissions sensiblement nul est déterminée analytiquement ou par simulation en faisant varier la charge d'entrée du réseau et en la comparant à la charge de sortie, la charge d'entrée G retenue étant la valeur maximale de la charge d'entrée pour laquelle la charge de sortie est sensiblement égale à la charge d'entrée.

4. Procédé de contrôle de congestion selon l'une des revendications précédentes dans lequel, pour chaque message ou fragment de message à émettre (112,122,132), au moins un message ou fragment de message redondant est généré, l'instant d'émission réel d'un message ou fragment de message redondant étant défini comme une valeur aléatoire prise dans ladite fenêtre de congestion dont le début coïncide avec l'instant donné de réception dudit message ou fragment de message à émettre (112,122,132), la charge G d'entrée du réseau est remplacée par la charge normalisée d'entrée du réseau égale à la charge G d'entrée du réseau divisée par le nombre de messages ou fragments de message total associé à un message ou fragment de message à émettre.

5. Procédé de contrôle de congestion selon l'une des revendications précédentes dans lequel la durée ΔTf de la fenêtre de congestion et l'instant d'émission (T1,T2,T3) dudit message sont définis comme des nombres entiers de slots temporels, un slot temporel ayant une durée constante au moins égale à la durée nécessaire pour transmettre un message ou fragment de message (112,122,132).

6. Procédé de contrôle de congestion selon l'une des revendications précédentes dans lequel il comporte en outre une étape (204) de transmission dudit message ou fragment de message à émettre (112,122,132) ou dudit message ou fragment de message redondant avec un retard égal audit instant d'émission réel (T1,T2,T3).

7. Procédé de contrôle de congestion selon l'une des revendications précédentes dans lequel le nombre N de terminaux en cours d'émission est évalué en exécutant les sous-étapes suivantes, pour chaque message émis par un terminal sous forme d'au moins un fragment :

    - Identifier le numéro ou la position du fragment émis parmi les fragments appartenant audit message,
    - Si le fragment émis est le 1er fragment d'un message, incrémenter d'une unité le nombre N de terminaux en cours d'émission,
    - Si le fragment émis est le dernier fragment d'un message, décrémenter d'une unité le nombre N de terminaux en cours d'émission,
    - Si le fragment émis est l'unique fragment d'un message, incrémenter d'une unité le nombre N de terminaux en cours d'émission puis décrémenter, après une durée prédéterminée, d'une unité le nombre N de terminaux en cours d'émission.

8. Dispositif (310) pour le contrôle de congestion dans un réseau de communications comprenant une pluralité de terminaux (301,302,303) aptes à émettre un message, ledit dispositif (310) étant **caractérisé en ce qu'**il comprend des premiers moyens (321) adaptés pour évaluer le nombre de terminaux en cours d'émission et définir un intervalle temporel, appelé fenêtre de congestion, de durée ∆Tf configurée de sorte à être proportionnelle au nombre N de terminaux en cours d'émission et inversement proportionnelle à la charge G d'entrée maximale du réseau qui permet d'obtenir un taux de retransmissions sensiblement nul et des seconds moyens (322) adaptés pour transmettre, à une fréquence donnée, à l'ensemble des terminaux du réseau une information permettant de déduire la durée ∆Tf de la fenêtre de congestion.

9. Dispositif (310) selon la revendication 8 dans lequel lesdits premiers moyens (321) sont adaptés à exécuter les sous-étapes suivantes, pour chaque message émis par un terminal sous forme d'au moins un fragment :

    - Identifier le numéro ou la position du fragment émis parmi les fragments appartenant audit message,
    - Si le fragment émis est le 1er fragment d'un message, incrémenter d'une unité le nombre de terminaux en cours d'émission,
    - Si le fragment émis est le dernier fragment d'un message, décrémenter d'une unité le nombre de terminaux en cours d'émission,
    - Si le fragment émis est l'unique fragment d'un message, incrémenter d'une unité le nombre de terminaux en cours d'émission puis décrémenter, après une durée prédéterminée, d'une unité le nombre de terminaux en cours d'émission.

10. Terminal émetteur (301,302,303) apte à émettre un message dans un réseau de communications comprenant une pluralité desdits terminaux, **caractérisé en ce qu'**il comprend des premiers moyens (311) adaptés pour recevoir une information permettant de déduire la durée ∆Tf d'un intervalle temporel, appelé fenêtre de congestion, au sein duquel ledit message peut être émis, des seconds moyens (312) adaptés pour définir l'instant d'émission réel (T1,T2,T3) dudit message ou d'un fragment dudit message comme une valeur aléatoire prise dans la fenêtre de congestion dont le début coïncide avec l'instant donné de réception (111,121,131) dudit message et des troisièmes moyens (313) aptes à transmettre ledit message ou fragment de message avec un retard égal audit instant d'émission défini.

11. Réseau de communication comprenant une pluralité de terminaux (301,302,303) émetteurs selon la revendication 10 et au moins un dispositif (310) de contrôle de congestion au sein dudit réseau selon l'une des revendications 8 ou 9.

12. Programme d'ordinateur comportant des instructions pour l'exécution du procédé de contrôle de congestion selon l'une quelconque des revendications 1 à 7, lorsque le programme est exécuté par un processeur.

13. Support d'enregistrement lisible par un processeur sur lequel est enregistré un programme comportant des instructions pour l'exécution du procédé de contrôle de congestion selon l'une quelconque des revendications 1 à 7, lorsque le programme est exécuté par un processeur.

**Patentansprüche**

1. Verfahren zum Steuern von Überlastung in einem Kommunikationsnetz, das mehrere Endgeräte zum Senden einer Nachricht umfasst, wobei das Verfahren **dadurch gekennzeichnet ist, dass** es die folgenden Schritte beinhaltet:

    - Empfangen einer Nachricht oder eines Nachrichtenfragments zu einem gegebenen Zeitpunkt;
    - Beurteilen (201) der Zahl der aktuell sendenden Endgeräte;
    - Definieren (202) eines Zeitintervalls, Überlastungsfenster genannt, der Dauer ∆Tf, so konfiguriert, dass es zur Anzahl N von aktuell sendenden Endgeräten proportional und zur maximalen Eingangslast G des Netzwerks umgekehrt proportional ist, bei der eine Neuübertragungsrate von im Wesentlichen null erzielt werden kann;
    - In-Übereinstimmung-Bringen, für jedes Endgerät und jede(s) zu übertragende(s) Nachricht oder Nachrichtenfragment (112, 122, 132), des Anfangs des Überlastungsfensters mit dem gegebenen Zeitpunkt (111, 121, 131) des Empfangs einer/s Nachricht oder Nachrichtenfragments und Definieren (203) eines tatsächlichen Sendezeitpunkts (T1, T2, T3) der/des Nachricht oder Nachrichtenfragments (112, 122, 132) als in dem Überlastungsfenster genommener Zufallswert.

2. Überlastungssteuerverfahren nach Anspruch 1, wo-

bei die Dauer ∆Tf relativ zu einer Zeiteinheit normalisiert wird, die mit der Sendedauer einer/s Nachricht oder Nachrichtenfragments assoziiert ist und mit

$$\Delta T_f = \frac{N \times 2}{G}$$ gleich angenommen wird.

3. Überlastungssteuerverfahren nach einem der vorherigen Ansprüche, wobei die maximale Eingangslast G des Netzwerks, die eine Neuübertragungsrate von im Wesentlichen null zulässt, analytisch oder durch eine Simulation durch Variieren der Eingangslast des Netzwerks ermittelt und mit der Ausgangslast verglichen wird, wobei die Eingangslast G der Maximalwert der Eingangslast ist, für den die Ausgangslast im Wesentlichen gleich der Eingangslast ist.

4. Überlastungssteuerverfahren nach einem der vorherigen Ansprüche, wobei für jede(s) zu sende(s) Nachricht oder Nachrichtenfragment (112, 122, 132) wenigstens ein(e) redundante(s) Nachricht oder Nachrichtenfragment erzeugt wird, wobei der tatsächliche Sendezeitpunkt einer/s redundanten Nachricht oder Nachrichtenfragments als ein in dem Überlastungsfenster genommener Zufallswert definiert wird, dessen Anfang mit dem gegebenen Zeitpunkt des Empfangs der/des zu sendenden Nachricht oder Nachrichtenfragments (112, 122, 132) übereinstimmt, wobei die Eingangslast G des Netzwerks durch die normalisierte Eingangslast des Netzwerks ersetzt wird, die gleich der Eingangslast G des Netzwerks dividiert durch die Gesamtzahl der mit einer/m zu sendenden Nachricht oder Nachrichtenfragment assoziierten Nachrichten oder Nachrichtenfragmente ist.

5. Überlastungssteuerverfahren nach einem der vorherigen Ansprüche, wobei die Dauer ∆Tf des Überlastungsfensters und der Sendezeitpunkt (T1, T2, T3) der Nachricht als ganze Zahlen von Zeitschlitzen definiert werden, wobei ein Zeitschlitz eine konstante Dauer hat, die wenigstens gleich der Dauer ist, die zum Senden einer/s Nachricht oder Nachrichtenfragments (112, 122, 132) benötigt wird.

6. Überlastungssteuerverfahren nach einem der vorherigen Ansprüche, das ferner einen Schritt (204) des Sendens der/des zu sendenden Nachricht oder Nachrichtenfragments (112, 122, 132) oder der/des redundanten Nachricht oder Nachrichtenfragments mit einer Verzögerung beinhaltet, die gleich dem tatsächlichen Sendezeitpunkt (T1, T2, T3) ist.

7. Überlastungssteuerverfahren nach einem der vorherigen Ansprüche, bei dem die Anzahl N von aktuell sendenden Endgeräten durch Ausführen, für jede von einem Endgerät in Form von wenigstens einem Fragment gesendete Nachricht, der folgenden Unterschritte beurteilt wird:

- Identifizieren der Anzahl oder der Position des gesendeten Fragments unter den zu der Nachricht gehörenden Fragmenten;
- Inkrementieren, wenn das gesendete Fragment das erste Fragment einer Nachricht ist, der Anzahl N von aktuell sendenden Endgeräten um eine Einheit;
- Dekrementieren, wenn das gesendete Fragment das letzte Fragment einer Nachricht ist, der Anzahl N von aktuell sendenden Endgeräten um eine Einheit;
- Inkrementieren, wenn das gesendete Fragment das einzige Fragment einer Nachricht ist, der Anzahl N von aktuell sendenden Endgeräten um eine Einheit, dann Dekrementieren, nach einer vorbestimmten Dauer, der Anzahl N von aktuell sendenden Endgeräten um eine Einheit.

8. Vorrichtung (310) zur Überlastungssteuerung in einem Kommunikationsnetz, das mehrere Endgeräte (301, 302, 303) umfasst, die eine Nachricht senden können, wobei die Vorrichtung (310) **dadurch gekennzeichnet ist, dass** sie Folgendes umfasst: erste Mittel (321) zum Beurteilen der Anzahl von aktuell sendenden Endgeräten und zum Definieren eines Zeitintervalls, Überlastungsfenster genannt, der Dauer ∆Tf, das so konfiguriert ist, dass es proportional zur Anzahl N von aktuell sendenden Endgeräten und umgekehrt proportional zur maximalen Eingangslast G des Netzwerks ist, die die Erzielung einer Neuübertragungsrate von im Wesentlichen null zulässt, und zweite Mittel (322) zum Senden, auf einer gegebenen Frequenz, einer Information zum Ableiten der Dauer ∆Tf des Überlastungsfensters zu allen Endgeräten des Netzwerks.

9. Vorrichtung (310) nach Anspruch 8, wobei die ersten Mittel (321) zum Ausführen, für jede von einem Endgerät in Form von wenigstens einem Fragment gesendete Nachricht, der folgenden Teilschritte ausgelegt ist:

- Identifizieren der Anzahl oder der Position des gesendeten Fragments unter den zu der Nachricht gehörenden Fragmenten;
- Inkrementieren, wenn das gesendete Fragment das erste Fragment einer Nachricht ist, der Anzahl N von aktuell sendenden Endgeräten um eine Einheit;
- Dekrementieren, wenn das gesendete Fragment das letzte Fragment einer Nachricht ist, der Anzahl N von aktuell sendenden Endgeräten um eine Einheit;
- Inkrementieren, wenn das gesendete Fragment das einzige Fragment einer Nachricht ist, der Anzahl von aktuell sendenden Endgeräten um eine Einheit, dann Dekrementieren, nach einer vorbestimmten Dauer, der Anzahl von aktuell sendenden Endgeräten um eine Einheit.

**10.** Sendeendgerät (301, 302, 303), das eine Nachricht in einem Kommunikationsnetz mit mehreren der Endgeräte senden kann, **dadurch gekennzeichnet, dass** es Folgendes umfasst: erste Mittel (311) zum Empfangen von Informationen zum Ableiten der Dauer ∆Tf eines Zeitintervalls, Überlastungsfenster genannt, innerhalb dessen die Nachricht gesendet werden kann, zweite Mittel (312) zum Definieren des tatsächlichen Sendezeitpunkts (T1, T2, T3) der Nachricht oder eines Fragments der Nachricht als in dem Überlastungsfenster genommener Zufallswert, dessen Anfang mit dem gegebenen Empfangszeitpunkt (111, 121, 131) der Nachricht zusammenfällt, und dritte Mittel (313) zum Senden der/des Nachricht oder Nachrichtenfragments mit einer Verzögerung, die gleich dem definierten Sendezeitpunkt ist.

**11.** Kommunikationsnetz, das mehrere Sendeendgeräte (301, 302, 303) nach Anspruch 10 und wenigstens eine Vorrichtung (310) zum Steuern von Überlastung in dem Netzwerk nach Anspruch 8 oder 9 umfasst.

**12.** Computerprogramm, das Befehle zum Ausführen des Überlastungssteuerverfahrens nach einem der Ansprüche 1 bis 7 enthält, wenn das Programm von einem Prozessor abgearbeitet wird.

**13.** Prozessorlesbares Aufzeichnungsmedium, auf dem ein Programm aufgezeichnet ist, das Befehle zum Ausführen des Überlastungssteuerverfahrens nach einem der Ansprüche 1 bis 7 umfasst, wenn das Programm von einem Prozessor abgearbeitet wird.

**Claims**

**1.** A method for controlling congestion in a communications network comprising a plurality of terminals capable of transmitting a message, said method being **characterised in that** it comprises the following steps:

- receiving a message or message fragment at a given instant;
- assessing (201) the number of terminals currently transmitting;
- defining (202) a time slot, called congestion window, of duration ∆Tf that is configured so as to be proportional to the number N of terminals currently transmitting and to be inversely proportional to the maximum input load G of the network that allows a substantially zero retransmissions rate to be obtained;
- making, for each terminal and each message or message fragment (112, 122, 132) to be transmitted, the start of the congestion window coincide with said given instant (111, 121, 131) of receiving a message or message fragment and defining (203) an actual transmission instant (T1, T2, T3) of said message or message fragment (112, 122, 132) as a random value taken in the congestion window.

**2.** The congestion control method according to claim 1, wherein the duration ∆Tf is normalised relative to a unit of time associated with the transmission duration of a message or message fragment and is considered to be equal to $\Delta T_f = \dfrac{N \times 2}{G}$.

**3.** The congestion control method according to any one of the preceding claims, wherein the maximum input load G of the network that allows a substantially zero retransmissions rate to be obtained is determined analytically or by simulation by varying the input load of the network and comparing it with the output load, with the input load G maintained being the maximum value of the input load for which the output load is substantially equal to the input load.

**4.** The congestion control method according to any one of the preceding claims, wherein, for each message or message fragment (112, 122, 132) to be transmitted, at least one redundant message or message fragment is generated, with the actual transmission instant of a redundant message or message fragment being defined as a random value taken in said congestion window, the start of which coincides with the given instant of receiving said message or message fragment (112, 122, 132) to be transmitted, the input load G of the network is replaced by the normalised input load of the network that is equal to the input load G of the network divided by the total number of messages or message fragments associated with a message or message fragment to be transmitted.

**5.** The congestion control method according to any one of the preceding claims, wherein the duration ∆Tf of the congestion window and of the transmission instant (T1, T2, T3) of said message are defined as integers of time slots, a time slot having a constant duration that is at least equal to the duration needed to transmit a message or message fragment (112, 122, 132).

**6.** The congestion control method according to any one of the preceding claims, which further comprises a step (204) of transmitting said message or message fragment (112, 122, 132) to be transmitted or said redundant message or message fragment with a delay that is equal to said actual transmission instant (T1, T2, T3).

7. The congestion control method according to any one of the preceding claims, wherein the number N of terminals currently transmitting is assessed by executing, for each message transmitted by a terminal in the form of at least one fragment, the following sub-steps:

   - identifying the number or the position of the transmitted fragment from among the fragments belonging to said message;
   - incrementing, if the transmitted fragment is the first fragment of a message, the number N of terminals currently transmitting by one unit;
   - decrementing, if the transmitted fragment is the last fragment of a message, the number N of terminals currently transmitting by one unit;
   - incrementing, if the transmitted fragment is the only fragment of a message, the number N of terminals currently transmitting by one unit, then decrementing, after a predetermined duration, the number N of terminals currently transmitting by one unit.

8. A device (310) for controlling congestion in a communications network comprising a plurality of terminals (301, 302, 303) capable of transmitting a message, said device (310) being **characterised in that** it comprises first means (321) adapted to assess the number of terminals currently transmitting and to define a time slot, called congestion window, of duration $\Delta Tf$ that is configured so as to be proportional to the number N of terminals currently transmitting and to be inversely proportional to the maximum input load G of the network that allows a substantially zero retransmissions rate to be obtained, and second means (322) adapted to transmit, at a given frequency, information for deducing the duration $\Delta Tf$ of the congestion window to all of the terminals of the network.

9. The device (310) according to claim 8, wherein said first means (321) are adapted to execute, for each message transmitted by a terminal in the form of at least one fragment, the following sub-steps:

   - identifying the number or the position of the transmitted fragment from among the fragments belonging to said message;
   - incrementing, if the transmitted fragment is the first fragment of a message, the number N of terminals currently transmitting by one unit;
   - decrementing, if the transmitted fragment is the last fragment of a message, the number N of terminals currently transmitting by one unit;
   - incrementing, if the transmitted fragment is the only fragment of a message, the number N of terminals currently transmitting by one unit, then decrementing, after a predetermined duration, the number N of terminals currently transmitting by one unit.

10. A transmitter terminal (301, 302, 303) capable of transmitting a message in a communications network comprising a plurality of said terminals, **characterised in that** it comprises first means (311) adapted to receive information for deducing the duration $\Delta Tf$ of a time slot, called congestion window, within which said message can be transmitted, second means (312) adapted to define the actual transmission instant (T1, T2, T3) of said message or of a fragment of said message as a random value taken in the congestion window, the start of which coincides with the given reception instant (111, 121, 131) of said message and third means (313) adapted to transmit said message or message fragment with a delay that is equal to said defined transmission instant.

11. A communications network comprising a plurality of transmitter terminals (301, 302, 303) according to claim 10 and at least one device (310) for controlling congestion within said network according to any one of claims 8 or 9.

12. A computer program comprising instructions for executing the congestion control method according to any one of claims 1 to 7 when said program is executed by a processor.

13. A processor-readable recording medium, on which a program is recorded that comprises instructions for executing the congestion control method according to any one of claims 1 to 7 when said program is executed by a processor.

FIG.1

EP 2 787 702 B1

**FIG.2**

**FIG.3**

**EP 2 787 702 B1**

## RÉFÉRENCES CITÉES DANS LA DESCRIPTION

**Documents brevets cités dans la description**

- EP 1686746 B1